# EUROPEAN PATENT SPECIFICATION

(11) **EP 0 243 162 B1**
(45) Date of publication and mention of the grant of the patent: **17.02.1993**
(21) Application number: 87303521.6
(22) Date of filing: 22.04.1987
(51) Int. Cl.: B32B 7/02, B32B 25/20

(54) **Multi-layered microwave absorber and method of manufacturing the same**
Mehrschichtiger Mikrowellenabsorber und Verfahren zu seiner Herstellung
Absorbeur de micro-ondes, multicouche et son procédé de fabrication

(30) Priority: 14.05.1986 JP 108634/86; 22.04.1986 JP 91280/86
(43) Date of publication of application: 28.10.1987
(73) Proprietor: THE YOKOHAMA RUBBER CO., LTD., Tokyo, 105 (JP)
(72) Inventor: Hiza, Misao, Hiratsuka-shi Kanagawa-ken (JP); Yamazaki, Hajime, Hadano-shi Kanagawa-ken (JP); Sugihara, Kazuhiro, Hiratsuka-shi, Kanagawa-ken (JP); So, Tetsu, Hiratsuka-shi, Kanagawa-ken (JP)
(74) Representative: White, Martin David

(56) References cited:
- GB-A- 1 074 971
- US-A- 4 116 906
- US-A- 4 173 018
- Trans. IECE, 62, 428-434 (1979)

## Description

This invention relates to multi-layered microwave-absorptive materials for use in ships, aircrafts and other mobile structures.

Microwave-absorptive materials are broadly classified into an attenuation type in which the energy of incident wave attenuates as it passes through the absorber, and a matching type in which the amount of reflection of incident wave on the front surface of the absorber and that of reflection of wave from a reflector on the rear surface of the absorber are controlled so as to in effect eliminate the generation of reflected wave.

A typical matching-type wave absorber well known in the art comprises an absorbing layer made up of a synthetic resin or rubber sheet carrying magnetic ferrite (Fe₂O₃). This type of material excels of course in wave absorption, but is rather heavy, hence unsuitable for light-weight applications and furthermore structurally weak as it is a resinous or rubber sheet simply admixed with ferrite. Attempts were made to produce a light-weight microwave absorber from a rubber composition having dispersed therein carbonblack particles in place of ferrite. Such wave absorbers were however effective only in handling a narrow band of microwaves. It has been known that wave absorption over wide bands can be achieved by the use of multi-layered absorbers, a typical example of which comprises a low impedance layer usually free of ferrite or carbonblack, a high impedance layer containing substantial amounts of ferrite or carbonblack, and a reflection layer containing same metal or fibrous carbon, these layers being laminated or otherwise bonded together in the order mentioned so that the impedance of each layer increases progressively in the direction of incidence of a microwave. However, such a multilayered structure has a drawback in that when the layers each particularly composed of a heat-resistant matrix resin are laminated and cured simultaneously, each layer undergoes strain upon cooling to room temperature due to the pressure of considerable internal stresses resulting from the differences in the thermal coefficient of contraction between the different layers.

For example, Trans. IECE, 62, 428-434 (1979), on which the preambles of both claim 1 and claim 6 are based, discloses a multi-layered microwave absorber comprising: a first layer including a resinous material free of ferroelectric and ferromagnetic materials and having a first impedance; a second layer bonded to said first layer and having a second impedance greater than the first impedance; and a third layer bonded to said second layer for reflecting microwave energy and having a third impedance greater than the second impedance.

Trans. IECE, 62, 428-434 (1979) discloses an absorber with a second layer including for example: resistance film; carbon rubber; cellular urethane containing carbon or graphite; or cellular polystyrol containing graphite.

With the foregoing difficulties of the prior art in view, the present invention is aimed at the provision of an improved multi-layered microwave absorber which is capable of wave absorption over a wide band, free from deformation or distortion, and highly heat-resistant and weather-proof, and a method of making the same.

According to the present method, it is possible to manufacture a multi-layered microwave absorber which is uniform in thickness even if it is complex in shape.

The invention therefore relates to a multi-layered microwave absorber in accordance with claim 1 and to a method of making the same according to claim 6. Dependent claims 2 to 5 concern preferred embodiments of the absorber of the invention.

These and other objects and features of the invention will be better understood from the following detailed description.

Briefly stated, a multi-layered microwave absorber according to the invention comprises a first layer including a resinous material free of ferroelectric and ferromagnetic materials and having a first impedance; a second layer bonded to said first layer and having a second impedance greater than the first impedance; a third layer bonded to said second layer for reflecting microwave energy and having a third impedance greater than the second impedance; said multi-layered microwave absorber being characterised in that it further comprises a silicone adhesive compound applied to bond said first, second and third layers into an integral sheet structure, said adhesive compound having a coat thickness of less than 0.1mm; in that said second layer comprises a resinous material dispersed with at least one of a ferroelectric material and a ferromagnetic material; and in that said third layer comprises a reinforced composite material.

Figure 1 is a cross-sectional view of part of the microwave absorber embodying the invention; and

Figure 2 is a graphical representation of the performance characteristics of the absorber.

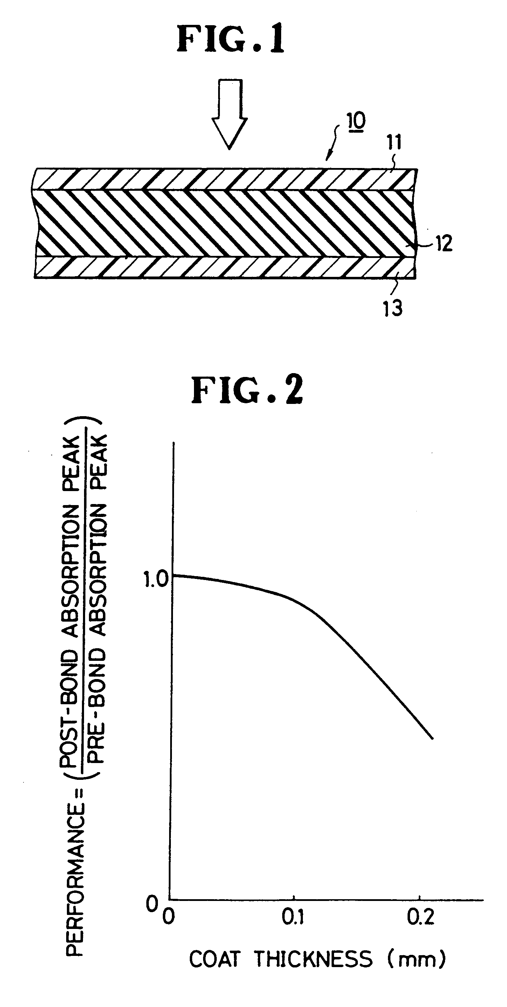

As shown in Figure 1, the microwave absorber 10 comprises at least three different layers; i.e., an outer surface layer 11, an absorbing layer 12 and a reflecting layer 13 which are laminated in this order. The arrow indicates the direction of incidence of a microwave, in which the impedance increases progressively.

The outer surface layer 11 is formed of a thermosetting resin such as an epoxy resin, or a silicone rubber, or thermoplastic resin, and is free of ferroelectric or ferromagnetic materials. This layer may be in same instances reinforced for structural strength with an organic fiber such as of aromatic polyamides or an inorganic fiber such as of glass.

The absorbing layer 12 is formed of a matrix resin dispersed with a ferroelectric material such as carbonblack or a ferromagnetic material such as ferrite whereby its impedence increases progressively in the direction of incidence of microwaves. The layer 12 may be in some instances formed of more than one layer with varied proportions of fillers.

The reflecting layer 13 is formed of a sheet of metal or a composite sheet material reinforced with a metal or carbon fiber.

The above layers 11, 12 and 13 are laminated together with the use of a silicone-type adhesive compound which is curable at room temperature and resistant to wide temperature variations. This adhesive compound may be a one-pack type such as a de-acetic acid type, de-alcohol type, de-oxime type and de-acetone type, or a two-pack type catalytically curable.

The adhesive compound must be applied to extremely small thicknesses and with maximum uniformity so as to eliminate any possible adverse effect on the performance of the microwave absorber. It has now been found that such critical coating thicknesses are below 0.1 mm.

The adhesive compound may be applied to adjoining surfaces of the layers 11, 12 and 13 of the absorber 10 by spraying and cured at room temperature and at below atmospheric pressure by means of for example a vacuum bag in which the thus adhered absorber 10 is packed and disposed in vacuum or near vacuum at room temperature for 24 hours.

The invention will be further described by way of the following examples which should not be regarded as limiting the invention thereto.

### Inventive Example 1

An aromatic polyamide fiber cloth was impregnated with an epoxy resin and cured at 177°C and 637 kPa (6.5 kg/cm²) for two hours, thereby providing a low impedance layer; namely, the outer surface layer 11. To 100 parts by weight of a liquid silicone rubber was added dispersively 40 parts by weight of a particulate carbonblack, the whole being cured to provide a high impedance intermediate layer; namely, the absorbing layer 12. A carbon fiber cloth was impregnated with an epoxy resin and cured in a manner similar to the outer surface layer 11 to provide an inner surface; namely, the reflecting layer 13. These three layers were laminated and applied with the use of RTV silicone spray of Fine Chemicals Japan Ltd. and packed in a vacuum bag for 10 hours to be cured at room temperature and set into an integral sheet structure. No warp or other distortion was found in any of the individual layers. The adhesive spray was applied to a thickness of 0.075 mm. The resulting sheet structure was tested for its absorption performance, which was substantially comparable to a non-bonded counterpart control.

Figure 2 graphically shows a microwave absorbing performance plotted against an adhesive coat thickness, from which it will be seen that the absorbing ability of the absorber peak at 1.0 declines sharply with coat thicknesses exceeding 0.1 mm.

### Comparative Example 1

The three layers as prepared in Inventive Example 1 were bonded together by brush coating of a room temperature curable silicone adhesive (tradenamed KE-66 of Shinetsu Chemical Industry Co.) diluted with 2-butanone to a 20% solution, and were cured as per Inventive Example 1. The adhesive coat was 0.125 mm thick. The wave absorbing performance was poor with absorption peak shifted more than 2 GHz as compared with a non-bonded counterpart.

### Comparative Example 2

The outer surface or low impedance layer 11 and the inner surface or reflecting layer 13 were prepared by the procedure of Inventive Example 1. The absorbing or high impedance layer 12 was prepared from an admixture of 40 wt. parts of an epoxy resin (tradenamed TETRAD X of Mitsubishi Gas Chemical Co.) 60 wt. parts of an anhydrous acid (tradenamed MHAC-P of Hitachi Chemical Co.) and 30 wt. parts of a particulate carbonblack. The admixture was press-cured at 150°C, the three layers of which were then bonded together with an adhesive compound comprising 100 wt. parts of an epoxy resin (tradenamed ELM 434 of Sumitomo Chemical Co.) and 40 wt. parts of p-diaminodiphenyl methane and press-cured at 150°C for one hour. The resulting composite sheet was warped over its entirety when cooled to room temperature. The high impedance layer 12 in particular was found cracked.

### Inventive Example 2

An aromatic polyamide fiber cloth was impregnated with a resin chiefly including bismaleimide -triazine resin (tradenamed BT 2160, manufactured by Mitsubishi Gas Chemical Co.) and cured at 177°C and 637 kPa (6.5 kg/cm²) for two hours, thereby providing a low impedance layer, i.e. the outer surface layer 11, as in Inventive Example 1. To 100 parts by weight of a liquid silicone rubber was added dispersively 40 parts by weight of a particulate carbonblack, the whole beig cured to provide a high impedance intermediate layer; namely, the absorbing layer 12. A carbon fiber cloth was impregnated with an epoxy resin and cured in a manner similar to the outer surface layer 11 to provide an inner surface; namely, the reflecting layer 13. These three layers were laminated and applied with the use of RTV silicone spray of Fine Chemicals Japan Ltd. and packed in a vacuum bag for 10 hours to be cured at room temperature and set into an integral sheet structure. The adhesive spray was applied to a thickness of 0.075 mm. The resulting sheet structure was found to be free from warp or other distortion in any of the individual layers.

### Inventive Example 3

A glass fiber cloth was impregnated with an epoxy resin and cured at 177 °C and 637 kPa (6.5 kg/cm²) for two hours, thereby providing a low impedance layer, i.e. the outer surface layer 11, as in Inventive Example 1. To 100 parts by weight of a liquid silicone rubber was added dispersively 40 parts by weight of a particulate carbonblack, the whole being cured to provide a high impedance intermediate layer; namely, the absorbing layer 12. A carbon fiber cloth was impregnated with an epoxy resin and cured in a manner similar to the outer surface layer 11 to provide an inner surface; namely, the reflecting layer 13. These three layers were laminated and applied with the use of RTV silicone spray of Fine Chemicals Japan Ltd. and packed in a vacuum bag for 10 hours to be cured at room temperature and set into an integral sheet structure. The adhesive spray was applied to a thickness of 0.075 mm. The resulting sheet structure was found to be free from warp or other distortion in any of the individual layers.

## Claims

1. A multi-layered microwave absorber comprising:
a first layer (11) including a resinous material free of ferroelectric and ferromagnetic materials and having a first impedance;
a second layer (12) bonded to said first layer (11) and having a second impedance greater than the first impedance; and
a third layer (13) bonded to said second layer (12) for reflecting microwave energy and having a third impedance greater than the second impedance;
said multi-layered microwave absorber being characterised in that it further comprises a silicone adhesive compound applied to bond said first, second and third layers (11, 12, 13) into an integral sheet structure, said adhesive compound having a coat thickness of less than 0.1 mm;
in that said second layer (12) comprises a resinous material dispersed with at least one of a ferroelectric material and a ferromagnetic material; and
in that said third layer (13) comprises a reinforced composite material.

2. A multi-layered microwave absorber according to claim 1 wherein the resinous material of said first layer (11) includes at least one of a thermosetting resin and a thermoplastic resin.

3. A multi-layered microwave absorber according to claim 2 wherein the resinous material of said first layer (11) includes a silicone rubber.

4. A multi-layered microwave absorber according to any preceding claim wherein the resinous material of said second layer (12) includes a silicone rubber.

5. A multi-layered microwave absorber according to any preceding claim wherein the composite material of said third layer (13) includes at least one of a metallic material and a carbon fiber material.

6. A method of making a multi-layered microwave absorber, said method comprising the steps of:-
laminating a first layer (11) including a resinous material free of ferroelectric and ferromagnetic materials and having a first impedance, a second layer (12) having a second impedance greater than the first impedance, and a third layer (13) for reflecting microwave energy and having a third impedance greater than the second impedance;
bonding said layers (11, 12, 13) together; and
curing the bonded layers at room temperature and in vacuum,
said method being characterised in that said layers (11, 12, 13) are bonded together with a silicone-type adhesive compound applied to a coat thickness of less than 0.1 mm;
in that it comprises the step of including a resinous material dispersed with at least one of a ferroelectric material and a ferromagnetic material in said second layer (12);
and in that said third layer (13) is formed from a reinforced composite material.

## Patentansprüche

1. Mehrschichtiger Mikrowellenabsorber mit:
einer ersten Schicht (11), die ein von ferroelektrischen und ferromagnetischen Materialien freies und eine erste Impedanz aufweisendes harzförmiges Material beinhaltet;
einer mit der ersten Schicht (11) verklebten zweiten Schicht (12) mit einer zweiten Impedanz, die größer ist als die erste Impedanz; und
einer mit der zweiten Schicht (12) verklebten dritten Schicht (13) zur Reflexion von Mikrowellenenergie mit einer dritten Impedanz, die größer ist als die zweite Impedanz;
wobei der mehrschichtige Mikrowellenabsorber dadurch gekennzeichnet ist, daß er ferner eine zur Verklebung der ersten, zweiten und dritten Schicht (11, 12, 13) in eine Verbundplattenstruktur benutzte Silikonklebstoffverbindung aufweist, wobei die Klebstoffverbindung eine Schichtdicke von weniger als 0,1 mm hat;
daß die zweite Schicht (12) ein mit einem ferroelektrischen Material und/oder einem ferromagnetischen Material dispergiertes harzförmiges Material enthält; und
daß die dritte Schicht (13) ein verstärktes zusammengesetztes Material enthält.

2. Mehrschichtiger Mikrowellenabsorber nach Anspruch 1, bei dem das harzförmige Material der ersten Schicht (11) ein wärmeaushärtendes Harz und/oder ein thermoplastisches Harz enthält.

3. Mehrschichtiger Mikrowellenabsorber nach Anspruch 2, bei dem das harzförmige Material der ersten Schicht (11) ein Silikongummi enthält.

4. Mehrschichtiger Mikrowellenabsorber nach einem der vorhergehenden Ansprüche, bei dem das harzförmige Material der zweiten Schicht (12) ein Silikongummi enthält.

5. Mehrschichtiger Mikrowellenabsorber nach einem der vorhergehenden Ansprüche, bei dem das zusammengesetzte Material der dritten Schicht (13) ein metallisches Material und/oder ein Kohlefasermaterial enthält.

6. Verfahren zur Herstellung eines mehrschichtigen Mikrowellenabsorbers mit den Schritten:
Laminieren einer ersten Schicht (11), die ein von ferroelektrischen und ferromagnetischen Materialien freies harzförmiges Material mit einer ersten Impedanz enthält, einer zweiten Schicht (12) mit einer zweiten Impedanz, die größer ist als die erste Impedanz, und einer dritten Schicht (13) zur Reflexion von Mikrowellenenergie mit einer dritten Impedanz, die größer ist als die zweite Impedanz;
Verkleben der Schichten (11, 12, 13) miteinander; und Aushärten der verklebten Schichten bei Zimmertemperatur im Vakuum,
wobei das Verfahren dadurch gekennzeichnet ist, daß die Schichten (11, 12, 13) mit einer silikonartigen Klebstoffverbindung verklebt werden, die mit einer Schichtdicke von weniger als 0,1 mm verwendet wird;
daß es den Schritt des Einführens eines mit einem ferroelektrischen Material und/oder einem ferromagnetischen Material dispergierten harzigen Materials in die zweite Schicht (12) enthält;
und daß die dritte Schicht (13) aus einem verstärkten zusammengesetzten Material gebildet wird.

## Revendications

1. Un absorbeur multicouche de micro-ondes comprenant:
une première couche (11) englobant un matériau résineux exempt de matériaux ferroélectriques et ferromagnétiques et ayant une première impédance;
une deuxième couche (12) liée à ladite première couche (11) et ayant une deuxième impédance plus grande que la première impédance; et
une troisième couche (13) liée à ladite deuxième couche (12) pour réfléchir l'énergie des micro-ondes et ayant une troisième impédance plus grande que la deuxième impédance;
ledit absorbeur multicouche de micro-ondes étant caractérisé en ce qu'il comprend en outre un composé adhésif au silicone appliqué pour assembler lesdites première, deuxième et troisième couches (11, 12, 13) en une structure de feuille unique, ledit composé adhésif ayant une épaisseur de revêtement inférieure à 0,1 mm;
en ce que ladite deuxième couche (12) comprend un matériau résineux dispersé avec au moins un matériau ferroélectrique ou un matériau ferromagnétique; et
en ce que ladite troisième couche (13) comprend un matériau composite renforcé.

2. Un absorbeur multicouche de micro-ondes selon la revendication 1, dans lequel le matériau résineux de ladite première couche (11) englobe au moins une résine thermodurcissable ou une résine thermoplastique.

3. Un absorbeur multicouche de micro-ondes selon la revendication 2, dans lequel le matériau résineux de ladite première couche (11) englobe un caoutchouc silicone.

4. Un absorbeur multicouche de micro-ondes selon l'une quelconque des revendications précédentes, dans lequel le matériau résineux de ladite deuxième couche (12) englobe un caoutchouc silicone.

5. Un absorbeur multicouche de micro-ondes selon l'une quelconque des revendications précédentes, dans lequel le matériau composite de ladite troisième couche (13) englobe au moins un matériau métallique ou un matériau de fibres de carbone.

6. Un procédé de production d'un absorbeur multicouche de micro-ondes, ledit procédé comprenant les étapes suivantes;
laminage d'une première couche (11) englobant un matériau résineux exempt de matériaux ferroélectriques et ferromagnétiques et ayant une première impédance, une deuxième couche (12) ayant une deuxième impédance plus grande que la première impédance, et une troisième couche (13) pour réfléchir l'énergie des micro-ondes et ayant une troisième impédance plus grande que la deuxième impédance;
assemblage des dites couches (11, 12, 13); et
vulcanisation des couches assemblées à température ambiante et dans le vide,
ledit procédé étant caractérisé en ce que lesdites couches (11, 12, 13) sont assemblées avec un composé adhésif de type silicone ayant une épaisseur de revêtement inférieure à 0,1 mm;
en ce qu'il comprend l'étape d'inclusion d'un matériau résineux dispersé avec au moins un matériau ferroélectrique ou un matériau ferromagnétique dans ladite deuxième couche (12);
et en ce que ladite troisième couche (13) est composée d'un matériau composite renforcé.
